# EUROPEAN PATENT SPECIFICATION

(11) **EP 2 081 970 B1**
(45) Date of publication and mention of the grant of the patent: **11.04.2012**
(21) Application number: 07821949.0
(22) Date of filing: 29.10.2007
(51) Int. Cl.: C08F 220/18, C10M 145/14

(54) **METHACRYLATE COPOLYMER POURPOINT DEPRESSANTS**
METHACRYLATCOPOLYMER-POURPOINT-ERNIEDRIGER
ADDITIFS À BASE DE COPOLYMÈRE DE MÉTHACRYLATE ABAISSANT LE POINT D'ÉCOULEMENT

(30) Priority: 07.11.2006 CA 2567235; 18.09.2007 US 994335 P
(43) Date of publication of application: 29.07.2009
(73) Proprietor: BASF SE, 67056 Ludwigshafen (DE)
(72) Inventor: PEER, William Joseph, Patterson, NY 12563 (US); SCANLON, Eugene IV., Mamaroneck, NY 10543 (US)
(74) Representative: Fiesser, Gerold Michael
(86) International application number: PCT/EP2007/061589
(87) International publication number: WO 2008/055797

(56) References cited:
- GB-A- 1 424 977
- US-A- 3 642 633
- US-A- 4 045 376
- US-A- 5 696 066

## Description

This invention relates to a method of lowering the pourpoint of a mineral oil composition, which comprises adding to
(i) A mineral oil;
(ii) A polyalkyl methacrylate copolymer comprising monomer units formed from:
   (A) 60.0 - 96.0 wt.-% of a C₁₂-C₁₆alkyl methacrylate; and
   (B) 40.0 - 4.0 wt.-% of a C₁₈-C₃₀alkyl methacrylate;
   wherein component (B) comprises about 40 to about 50 weight percent C₁₈ alkyl methacrylate, about 5 to about 15 weight percent C₂₀ alkyl methacrylate and about 40 to about 50 weight percent C₂₂ alkyl methacrylate based on the total weight of component (B); and, optionally,
(iii) Other additives.
The copolymers can be used as pour point depressants or viscosity improvers at low temperatures for lubricating oils.

Polyalkyl methacrylate pour point depressants are known in the lubricating industry. Many attempts have been made to produce polyalkyl methacrylate pour point depressants that improve the low temperature viscometrics of various lubricating compositions.

Pour point depressant (PPD) additives improve the low-temperature performance of oils by modifying the wax crystallization process. A wide variety of chemical types are available, and include polyalkyl methacrylates, styrenated polyesters, alkylated polystyrenes, ethylene-vinyl acetate, vinyl acetate-fumarate, esterified olefinic polymers, styrene maleic anhydride, and alkylated naphthalenes.

The present alkyl methacrylate polymers exhibit desirable low temperature properties. More specifically, the invention is directed to PPDs that exhibit outstanding low temperature properties in lubricating oils for applications, such as automatic transmission fluids, manual transmission fluids, hydraulic fluids, greases, gear fluids, metal-working fluids, engine oil applications, crank case motor oil and shock absorber fluids. There is a growing need oil for PPDs that achieve optimum low-temperature performance at low concentrations. The present invention addresses the need for an improved PPD.

In particular, the invention addresses the need for a pour point depressant which can be used in a variety of oils at lower treat rates, displays less interactions with other components of the oil, such as dispersants and inhibitors, shows stability in shear fields and lower gelation indices in some instances depending on the base oil than for previous pour point polyalkyl methacrylates. It is also important that the PPD be soluble and compatible with the base oil and maintain an appropriate Brookfield viscosity at low temperatures. Incorporation of the inventive polyalkyl methacrylates is demonstrated. The addition of the inventive polyalkyl methacrylates gives improved viscosity at low temperatures while maintaining acceptable pour point depressant activity.

U.S. Patent No. 2,655,479 discloses a pour point depressant composition consisting of a blend of two copolymers, the first copolymer having an average side chain length of about 12.7 while the second copolymer has an average side chain length of about 11.2.

U.K. Patent No. 1 559 952 discloses a mixture of two classes of oil soluble polyalkyl methacrylates as pour point depressants.

U.S. Patent No. 4,146,492 discloses lubricating oil compositions comprising between about 0.5 and 30.0 wt.-% of a specifically defined ethylene-propylene copolymer and between about 0.005 to 10.0 wt.-% of a neat interpolymeric polyalkyl acrylate of (A) C₁-C₁₅alkyl acrylate and (B) C₁₆-C₂₂alkyl acrylate having a weight ratio of A:B of between about 90:10 and 50:50, a molecular weight of from 1 000 to 25 000 and an average alkyl side chain length of between about 11 and 16 carbon atoms.

U.S. Patent No. 4,867,894 discloses pour point improving additives for mineral oils comprising from 10 to 30 mol-% methyl methacrylate, 10 to 70 mol-% of a linear C₁₆-C₃₀alkyl methacrylate, from 10 to 80 mol% of a linear C₄-C₁₅alkyl methacrylate and/or a branched C₄-C₄₀alkyl methacrylate, and from 0 to 30 mol-% of a free-radically polymerizable nitrogen-containing monomer having dispersing action.

U.S. Patent Nos. 5,312,884 and 5,368,761 disclose copolymers useful as pour point depresssants for lubricating oils comprising 15-67 mol% C₈-C₁₅ alkyl(meth)acrylates, 3-40 mol-% C₁₆-C₂₄alkyl(meth)acrylates, and 30-65 mol-% C₁-C₄alkyl methacrylates. These patent documents do not teach copolymers containing the specific monomers in the specific proportions required by the present invention.

U.S. Patent No. 5,281,329 discloses copolymers useful as pour point depressants for oils containing at least two species of polyalkyl(meth)acrylate, one species having an onset of crystallization temperature above 15°C and one species having an onset of crystallization temperature below 15°C.

U.S. Patent No. 5,534,175 discloses copolymers of unsaturated fatty esters derived from 12-20 wt.-% of a C₁-C₃alkyl(meth) acrylate, 45-72 wt.-% of a C₁₁-C₁₅alkyl(meth)acrylate and 14-30 mass % of a C₁₆-C₂₅alkyl(meth) acrylate.

EP-A-236 844 discloses pour point improving agents derived from methyl methacrylate.

U.S. Patent No. 6,255,261 discloses copolymers formed from 5 to 60 wt.-% C₁₁-C₁₅alkyl-(meth)acrylates and 95 to 40 wt.-% C₁₆-C₃₀alkyl(meth) acrylates for use as pour point depressans.

The present invention is directed to a method as described in claim 1.

The polyalkyl methacrylate copolymers may be of any structure, such as linear, crosslinked, structured, lightly structured or branched chains.

The polyalkyl methacrylate copolymers are added to an oil of lubricating viscosity to form a lubricating oil composition.

A further embodiment of the invention relates to a lubricating oil composition comprising:
(i) An oil of lubricating viscosity;
(ii) A polyalkyl methacrylate copolymer according to claim 1; and, optionally,
(iii) Other additives.

Furthermore, the composition above is used to improve the low temperature properties of a lubricating oil.

The phrase "monomer units formed from" refers to the monomer units of the polymer formed after a monomer is reacted. For example, a C₁₂-C₁₆alkyl methacrylate monomer polymerrizes to give a polymer with a unit derived from the C₁₂-C₁₆alkyl methacrylate.

The term monomer by itself refers to the unpolymerized alkyl methacrylate.

Percentages are normally based on total weight unless specified otherwise.

The term copolymer refers to the polyalkyl methacrylate formed from monomer units derived from (A) and (B).

The copolymers have a relative weight average molecular weight ranging from about 5 000 to about 250 000. Typically, the weight average may range from about 10 000 to about 200 000, from about 150 000 to about 150 000 and most typically from about 20 000 to about 130 000. The molecular weight distribution is usually less than 2.5 and generally ranges from about 1.5 to about 2.5.

The molecular weight is determined by gel permeation chromatography (GPC) using a polymethyl methacrylate standard. The determined average molecular weight is therefore relative to the standard not absolute.

The long chain alkyl esters of the methacrylate may be linear or branched.

Cross linking agents are, for example, polyethylenically unsaturated crosslinking agents.

Examples are methylene bis(meth)acrylamide, polyethyleneglycol diacrylate; polyethyleneglycol dimethacrylate; N-vinyl acrylamide; divinylbenzene; tetra (ethyleneglycol) diacrylate; diallyloctylamide; trimethylpropane ethoxylate triacrylate; N-allylacrylamide N-methylallylacrylamide, pentaerythritol triacrylate and combinations thereof. Other systems for crosslinking can be used instead of or in addition to this. For instance covalent crosslinking through pendant groups can be achieved, for instance by the use of ethylenically unsaturated epoxy monomers, or by the use of polyfunctional crosslinking agents other known crosslinking systems.

The component (A) may for example, vary from about 65.0 to about 95.0 wt.-% or about 70.0 to about 95.0, about 80.0 to about 95.0, about 88.0 to about 95.0 wt.-% of the formed polyalkyl methacrylate copolymer.

The component (B) may for example, vary from about 35.0 to about 5.0 wt.-%, or about 30.0 to about 5.0, about 20.0 to about 5.0, about 15.0 to about 5.0, about 12.0 to about 5.0 wt.-% of the formed polyalkyl methacrylate copolymer.

The weight percentages of components (A) and (B) of the formed alkyl methacrylate are calculated by taking total weight of component (A) or (B) over the total weight of the formed polyalkyl methacrylate copolymer multiplied by 100. The basis weight of the formed copolymer is the copolymer per se and does not include the diluent.

The term C₁₂-C₁₆alkyl methacrylate means an alkyl ester of methacrylic acid having a straight or branched ester alkyl group of 12 to 16 carbon atoms, such as lauryl methacrylate, myristyl methacrylate, cetyl methacrylate, dodecyl methacrylate, tridecyl methacrylate, tetradecyl methacrylate, pentadecyl methacrylate, hexadecyl methacrylate and mixtures thereof.

The preferred source for the C₁₂-C₁₆alkyl methacrylate esters is lauryl methacrylate which contains a mixture of methacrylate esters formed from a mixture of C₁₂-C₁₆alkyl alcohols. For example, about 60.0 to about 96.0 wt.-% lauryl methacrylate esters, about 65.0 to about 95.0 wt.-% lauryl methacrylate esters make up the formed polymethacrylate copolymer.

Alternatively, the weight percentages for component (A) may vary as described above for lauryl methacrylate.

In the instance where lauryl methacrylate esters are used to make up component (A) of the polyalkyl methacrylate copolymers, the lauryl ester is derived from a straight or branched distribution of C12-C₁₆ long chain alcohols. The weight percentages of the compositions comprising lauryl methacrylate esters may range as below:

### Lauryl methacrylate Distribution

| Chain length | C 12 | C 14 | C 16 |
|---|---|---|---|
| Wt.-% | 68-74 | 20-26 | 2-6 |

The definition weight percentages of the various homologues in the lauryl methacrylate means weight percent on the basis of the total weight of the lauryl methacrylate. If the total lauryl methacrylate fraction is 100 g and the C 12 contribution is 68 g, the weight percentage of the C 12-component is 68 wt.-% of the total lauryl methacrylate.

It is preferable that the alkyl chains of component (A) are substantially linear.

It is preferred that the C₁₂-C₁₆alkyl esters contain only even ester chain lengths (C 12, C 14 and C 16) but even and odd ester chain lengths (C 12, C 13, C 14, C 15, and C 16) are also possible. In the case where only even chain lengths are used, the component (A) contains primarily C₁₂-, C₁₄- and C₁₆-alkyl esters.
(A) may consist essentially of about 60.0 to about 96 wt-% C₁₂-, C₁₄- and C₁₆-alkyl methacrylates.

The C 12 and C 14 homologues will typically dominate the (A) fraction. For example, at least about 80.0 wt.-% of the (A) fraction is C 12 and C 14. Typically at least 85.0 to 88 wt.-% of the (A) fraction is C 12 and C14.

The term "consists essentially of" means that minor levels of other monomers, polymerizable with the alkyl methacrylates may be present, as long as they do not adversely affect the low temperature properties of the fully formulated fluids.

The average chain length for the C₁₂-C₁₆alkyl methacrylates of component (A) vary from about 12 to about 13 carbon atoms.

The term C₁₈-C₃₀alkyl methacrylate means an alkyl ester of methacrylic acid having a straight chain or branched alkyl group of 18 to 30 carbon atoms per group, such as stearyl methacrylate, octadecyl methacrylate, heptadecyl methacrylate, nonadecyl methacrylate, eicosyl methacrylate, henicosyl methacrylate, docosyl methacrylate, tricosyl methacrylate, tetracosylmethacrylate, pentacosyl methacrylate, hexacosyl methacrylate, octacosyl methacrylate, nonacosyl methacrylate, triacontyl methacrylate, behenyl methacrylate and mixtures thereof.

A possible source for the C₁₈-C₃₀alkyl methacrylate esters is behenyl methacrylate esters. Behenyl methacrylate used in the present examples contains a range of long chain methacrylate esters wherein the length of the ester chain ranges from C₁₈ to C₂₂. For example, about 40.0 to about 4.0 wt.-% of the behenyl methacrylate esters make up the formed polyalkyl methacrylate copolymer. For example, 35.0 to about 5.0 wt.-%, about 30 to about 5.0 or about 20 to about 5.0 of the formed polyalkyl methacrylate copolymer is formed from behenyl methacrylate esters.

In the instance where behenyl methacrylate esters are used to make up component (B) of the polyalkyl methacrylate copolymers, the behenyl esters may be derived from a C₁₈-C₂₂ distribution of long chain alcohols. The weight percent compositions of the behenyl methacrylate esters may range as below:

### Behenyl Methacrylate Distribution

| Chain length | C 18 | C 20 | C 22 |
|---|---|---|---|
| Wt.-% | 40-50 | 5-15 | 40-50 |

When referring to distribution by weight percentages of the particular ester in the behenyl methacrylate, the weight percentage is based on the total weight of behenyl methacrylate.

Behenyl methacrylate may consist essentially of about 40.0 to about 50.0, preferably 42.0 to about 48.0 wt.-% C₁₈alkylmethacrylate, about 5.0 to about 15.0, preferably 6.5 to about 12.0 wt.-% C₂₀alkyl methacrylate and about 40.0 to about 50.0, preferably 42.0 to about 48.0 wt.-% C₂₂alkyl methacrylate based on the total weight of behenyl methacrylate.

The behenyl methacrylate is substantially linear and contains primarily C₁₈-C₂₂alkyl methacrylates. Behenyl methacrylate may contain a small amount of C₁₆alkyl. For example, behenyl methacrylate will normally contain less than 0.8 wt.-% C₁₆alkyl or less than 0.5 wt.-% C₁₆alkyl.

The C₁₆- and C₁₈alkyl methacrylates cummulative weight percentages in the formed copolymer generally will not exceed about 22.0 - 23.0 wt.-%. For example, the combined weight percentages of the C₁₆-alkyl and C₁₈-alkyl fractions may be about 15.0, 16.0, 17.0, 18.0, 19.0 or 21.0 wt.-% of the formed alkyl methacrylate from components (A) and (B) with a minimum of at least 7.0, 8.0 or 9.0 wt.-% for the cumulative weight percent of C₁₆-alkyl and C₁₈-alkyl methacrylates. For example, the (A) and (B) components are further defined as comprising a combined weight percent of C₁₆-alkyl and C₁₈alkyl methacrylates, which combined weight ranges from about a minimum of 7.0 wt.-% - about a maximum of 23.0 wt.-%, based on the total weight of the polymethacrylate copolymer.

Furthermore, the alkyl methacrylates esters in component (B) which are equal to or greater than C 20 makes up at least about 2.0 - about 40.0 wt.-% of the formed polyalkyl methacrylate copolymer. For example, a minimum of about 2.5, 3.0, 3.5, 4.0, 4.5, 5.0, 6.0, 7.0 or 8.0 wt.-% of the formed polyalkyl methacrylate copolymer is derived from C₂₀-C₃₀alkyl methacrylate esters. The formed polyalkyl methacrylate copolymer will be formed from a maximum of about 10.0, 20.0, 30.0 or 40.0 wt.-% of C₂₀-C₃₀alkyl methacrylate esters.

The (B) components are further defined as comprising a combined weight percent of C₂₀-C₃₀alkyl methacrylate esters, which weight ranges from about a minimum of 2.0 wt.-% - about a maximum of about 40.0 wt.-%, based on the total weight of the polyalkyl methacrylate copolymer.

The C₂₀-C₂₄alkyl homologues are preferred and the C₂₀-C₂₂alkyl homologues are the most preferred homologues of component (B). For example, the C₂₀-C₂₂alkyl homologues may make up about 2.0 - about 40.0, about 4.0 - about 40.0 or about 4.0 - about 30.0 wt.-% of the formed polyalkyl methacrylate copolymer. Typical weight ranges for the C₂₀-C₂₄alkyl homologues are about 4.0 - about 40.0, about 4.0 - about 30.0 or about 5.0 - about 20.0 wt.-% of the formed polyalkyl methacrylate copolymer.

The average chain length for the alkyl methacrylates of component (B) varies from about 20 - about 22 carbon atoms or about 20 - about 21 carbon atoms.

In a preferred embodiment the sum of (A) and (B) equals 100.0 wt.-% of the formed polyalkyl methacrylate copolymer.

The polymethacrylate PPD copolymers may optionally contain C₁-C₁₀alkyl methacrylates esters, or other polymerizable non-alkyl methacrylate monomers.

The polyalkyl methacrylates may consist essentially of monomers (A) and (B). For example the sum of (A) and (B) equals 100%.

The alkyl methacrylate comonomers containing 12 or more carbon atoms in the alkyl ester group are generally prepared by standard esterification procedures using technical grades of long chain aliphatic alcohols. These commercially available alcohols are mixtures of alcohols of varying chain lengths containing between 12 and 30 carbon atoms in the alkyl groups. Consequently, for the purposes of this invention, alkyl methacrylate comonomers are intended to include not only the individual alkyl methacrylate esters named, but also to include mixtures with other alkyl methacrylate esters.

Conventional methods of free-radical polymerization can be used to prepare the copolymers of the present invention. Polymerization of the alkyl methacrylate monomers can take place under a variety of conditions, including bulk polymerization, solution polymerization, usually in an organic solvent, preferably mineral oil.

In the solution polymerization, the reaction mixture comprises a diluent, the alkyl methacrylate monomers, a polymerization initiator and usually a chain transfer agent and optionally a crosslinker.

The diluent may be any inert hydrocarbon liquid. The weight ratio of diluent to total monomer charge may range from about 90:10 - about 60:40. The term total monomer charge means the combined amount of all monomers in the initial, i.e., unreacted, reaction mixture.

In preparing the copolymers by free-radical polymerization, the alkyl methacrylate monomers may be polymerized simultaneously or sequentially or the monomers may be fed over time to the reaction vessel. For example, the blend of C₁₂-C₃₀-alkyl methacrylate monomers may be fed over time to a reaction vessel along with an initiator feed.

Suitable polymerization initiators include initiators which disassociate upon heating to yield a free radical, e.g., peroxide compound, such as benzoyl peroxide, t-butyl perbenzoate, t-butyl peroctoate and cumene hydroperoxide; or azo compound such as azoisobutyronitrile and 2,2'-azobis(2-methylbutanenitrile). The mixture includes from about 0.01 wt.-% - about 5.0 wt.-% initiator, relative to the total monomer mixture. For example, 0.02 wt.-% - about 4.0 wt.-%, 0.02 wt.-% - about 3.5 wt.-% are envisioned. Typically about 0.02 wt.-% - about 2.0 wt.-% are used.

Suitable chain transfer agents include those conventional in the art such as mercaptanes and alcohols. For example, tridecyl mercaptan, dodecyl mercaptan and ethyl mercaptan may be used as chain transfer agents. The selection of the amount of chain transfer agent to be used is based on the desired molecular weight of the polymer being synthesized, as well as the desired level of shear stability for the polymer, i.e., if a more shear stable polymer is desired, more chain transfer agent can be added to the reaction mixture. The chain transfer agent is added to the reaction mixture or monomer feed in an amount of 0.01 - 3.0 wt.-% relative to the monomer mixture.

By way of example and without limitation, all components are charged to a reaction vessel that is equipped with a stirrer, a thermometer and a reflux condenser and heated with stirring under a nitrogen blanket to a temperature from about 50°C - about 125°C for a period of about 0.5 hours to about 15 hours to carry out the polymerization reaction.

A viscous solution of the copolymer in the diluent is obtained as the product of the above-described process.

To form the lubricating oils of the present invention, a base oil is treated with the copolymer of the invention in a conventional manner, i.e. by adding the copolymer to the base oil to provide a lubricating oil composition having the desired low temperature properties. The lubricating oil contains from about 0.01 - about 5.0 parts by weight, for example about 0.01 - about 2.0, more typically about 0.02 - about 0.5, of the neat copolymer (i.e. excluding diluent oil) per 100 weight parts of base oil. The preferred dosage will of course depend upon the base oil.

In a particularly preferred embodiment, the copolymer is added to the base oil in the form of a relatively concentrated solution of the copolymer in a diluent. The diluent oil may be any of the oils referred to below that are suitable for use as base oils.

The base oils are mineral oils and mixtures thereof. Suitable base oils also include basestocks obtained by isomerization of synthetic wax and slack wax, as well as basestocks produced by hydrocracking (rather than solvent extracting) the aromatic and polar components of the crude. In general, both the mineral and synthetic base oils will each have a kinematic viscosity ranging from about 1 - about 40 cSt at 100°C., although typical applications will require each oil to have a viscosity ranging from about 2 - about 20 cSt at 100°C.

The mineral oils useful in this invention include all common mineral oil base stocks. This would include oils that are naphthenic, paraffinic or aromatic in chemical structure.

Naphthenic oils are made up of methylene groups arranged in ring formation with paraffinic side chains attached to the rings. The pour point is generally lower than the pour point for paraffinic oils. Paraffinic oils comprise saturated, straight chain or branched hydrocarbons. The straight chain paraffins of high molecular weight raise the pour point of oils and are often removed by dewaxing. Aromatic oils are hydrocarbons of closed carbon rings of a semi-unsaturated character and may have attached side chains. This oil is more easily degraded than paraffinic and naphthalenic oils leading to corrosive by-products.

A base stock will normally contain a chemical composition which contains some proportion of all three (paraffinic, naphthenic and aromatic). For a discussion of types of base stocks, see Motor Oils and Engine Lubrication by A. Schilling, Scientific Publications, 1968, section 2.2-2.5.

The polyalkyl methacrylate copolymer may be used in paraffinic, naphthenic and aromatic type oils. For example, the polymethacrylate copolymer may be used in Groups I -V base oils. These groups are known by those skilled in the art. Additionally, the polymethacrylate copolymer may be used in gas to liquid oils.

Gas to liquid oils (GTL) are known in the art. Gaseous sources include a wide variety of materials such as natural gas, methane, C₁-C₃ alkanes, landfill gases, and the like. Such gases may be converted to liquid hydrocarbon products suitable for use as lubricant base oils by a gas to liquid (GTL) process, such as the process described in U.S. Patent. No. 6,497,812. Base oils derived from a gaseous source, hereinafter referred to as "GTL base oils", typically have a viscosity index of greater than about 130, a sulphur content of less than about 0.3 percent by weight, contain greater than about 90 wt.-% saturated hydrocarbons (isoparaffins), typically from about 95.0 - about 100.0 wt.-% branched aliphatic hydrocarbons, have a pour point of below -15°-20°C.

The GTL base oils may be mixed with more conventional base oils, such as Groups I - V as specified by American Petrol Institute. For example, the base oil component of the lubricant compositions may include 1-100 percent by weight to a GTL base oil.

A lubricating oil composition may be at least partially derived from a gaseous source and contain the instant polymethacrylate ester as a pour point depressant.

Oils may be refined by conventional methodology using acid, alkali, and clay or other agents such as aluminum chloride, or they may be extracted oils produced, for example, by solvent extraction with solvents such as phenol, sulphur dioxide, furfural, dichlordiethyl ether, etc.. They may be hydrotreated or hydrorefined, dewaxed by chilling or catalytic dewaxing processes, or hydrocracked. The mineral oil may be produced from natural crude sources or be composed of isomerized wax materials or residues of other refining processes. The preferred synthetic oils are oligomers of a-olefins, particularly oligomers of 1-decene, also known as poly-alphaolefins (PAO).

The base oils may be derived from refined, re-refined oils, or mixtures thereof. Unrefined oils are obtained directly from a natural source or synthetic source (e.g., coal, shale, or tar sands bitumen) without further purification or treatment. Examples of unrefined oils include a shale oil obtained directly from a retorting operation, a petroleum oil obtained directly from distillation, or an ester oil obtained directly from an esterification process, each of which is then used without further treatment. Refined oils are similar to the unrefined oils except that refined oils have been treated in one or more purification steps to improve one or more properties. Suitable purification techniques include distillation, hydrotreating, dewaxing, solvent extraction, acid or base extraction, filtration, and percolation, all of which are known to those skilled in the art. Re-refined oils are obtained by treating used oils in processes similar to those used to obtain the refined oils. These re-refined oils are also known as reclaimed or reprocessed oils and are often additionally processed by techniques for removal of spent additives and oils breakdown products.

The addition of at least one additional customary oil additive to the composition is possible. The mentioned lubricant compositions, e.g. greases, gear fluids, metal-working fluids and hydraulic fluids, may additionally comprise further additives that are added in order to improve their basic properties still further. Such additives include: further antioxidants, metal passivators, rust inhibitors, viscosity index enhancers, additional pour-point depressants, dispersants, detergents, further extreme-pressure additives and anti-wear additives. Such additives are added in the amounts customary for each of them, which range in each case approximately from 0.01- 10.0%, preferably 0.1 - 1.0%, by weight. Examples of further additives are given below:
1. Examples of Phenolic Antioxidants:
   1.1. Alkylated monophenols: 2,6-di-tert-butyl-4-methylphenol, 2-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alpha-methytcyclohexyl)-4,6-dimethylphenol, 2,6-dioctadecyl-4-methylphenol, 2,4,6-tricyclohexylphenol, 2,6-di-tert-butyl-4-methoxymethylphenol, linear nonylphenols or nonylphenols branched in the side chain, such as 2,6-dinonyl-4-methylphenol, 2,4-dimethyl-6-(1'-methyl-undec-1'-yl)-phenol, 2,4-dimethyl-6-(1'-methylheptadec-1'-yl)-phenol, 2,4-dimethyl-6-(1'-methyltridec-1'-yl)-phenol and mixtures thereof;
   1.2. Alkylthiomethylphenols: 2,4-dioctylthiomethyl-6-tert-butylphenol, 2,4-dioctylthiomethyl-6-methylphenol, 2,4-dioctylthiomethyl-6-ethylphenol, 2,6-didodecylthiomethyl-4-nonylphenol;
   1.3. Hydroquinones and alkylated hydroquinones: 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate;
   1.4. Tocopherols: alpha-, beta-, gamma- or delta-tocopherol and mixtures thereof (vitamin E);
   1.5. Hydroxylated thiodiphenyl ethers: 2,2'-thio-bis(6-tert-butyl-4-methylphenol), 2,2'-thio-bis(4-octylphenol), 4,4'-thio-bis(6-tert-butyl-3-methylphenol), 4,4'-thio-bis(6-tert-butyl-2-methylphenol), 4,4'-thio-bis(3,6-di-sec-amylphenol), 4,4'-bis(2,6-dimethyl-4-hydroxyphenyl)disulphide;
   1.6. Alkylidene bisphenols: 2,2'-methylene-bis(6-tert-butyl4-methylphenol), 2,2'-methylene bis(6-tert-butyl-4-ethylphenol), 2,2'-methylene-bis [4-methyl-6-(alpha-methylcyclohexyl) phenol], 2,2'-methylene-bis(4-methyl-6-cyclohexylphenol), 2,2'-methylene-bis(6-nonyl-4-methylphenol), 2,2'-methylene-bis(4,6-di-tert-butylphenol), 2,2'-ethylidene-bis(4,6-di-tert-butylphenol), 2,2'-ethylidene-bis(6-tert-butyl-4-isobutylphenol), 2,2'-methylene-bis[6-(alpha-methylbenzyl)-4-nonylphenol], 2,2'-methylene-bis[6-(alpha,alpha-dimethylbenzyl)-4-nonylphenol], 4,4'-methylene-bis(2,6-di-tert-butylphenol), 4,4'-methylene-bis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)-butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphen yl]terephthalate, 1,1-bis(3,5-dimethyl-2-hydroxyphenyl)butane, 2,2-bis(3,5-di-tert-butyl-4-hydroxyphenyl)-propane, 2,2-bis(5-tert-butyl-4-hydroxy-2-methylphenyl)-4-n-dodecylmercaptobutane, 1,1,5,5-tetra(5-tert-butyl-4-hydroxy-2-methylphenyl)pentane;
   1.7. O-, N- and S-benzyl compounds: 3,5,3',5'-tetra-tert-butyl-4,4'-dihydroxydibenzyl ether, octadecyl-4-hydroxy-3,5-dimethylbenzyl-mercaptoacetate, tridecyl-4-hydroxy-3,5-di-tert-butylbenzyl-mercaptoacetate, tris (3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulphide, isooctyl-3,5-di-tert-butyl-4-hydroxybenzyl-mercaptoacetate;
   1.8. Hydroxybenzylated malonates: dioctadecyl-2,2-bis(3,5-di-tert-butyl-2-hydroxybenzyl)-malonate, dioctadecyl-2-(3-tert-butyl-4-hydroxy-5-methylbenzyl)malonate, didodecylmercaptoethyl-2,2-bis(3,5-di-tert-butyl-4-hydroxybenzyl) malonate, di[4-(1,1,3,3-tetramethylbutyl)-phenyl]-2,2-bis(3,5-di-tert-butyl-4-hydroxybenzyl)malonate;
   1.9. Hydroxybenzyl aromatic compounds: 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol;
   1.10. Triazine compounds: 2,4-bis-octylmercapto-6-(3,5-di-tert-butyl-4-hydroxyanilino)-1,3,5-triazin e, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris (3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris(3,5-dicyclohexyl-4-hydroxybenzyl)isocyanurate;
   1.11. Acylaminophenols: 4-hydroxylauric acid anilide, 4-hydroxystearic acid anilide, N-(3,5-di-tert-butyl-4-hydroxyphenyl)-carbamic acid octyl ester;
   1.12. Esters of beta-(5-tert-butyl-4-hydroxy-3-methylphenyl) propionic acid: with polyhydric alcohols, e.g. with 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl) oxalic acid diamide, 3-thiaundecanol, 3-thiapentadecanol, trimethylhexanediol, trimethylolpropane, 4-hydroxymethyl-1-phospha-2,6,7-trioxabicyclo[2.2.2]octane;
   1.13. Esters of beta-(3,5-di-tert-butyl-4-hydroxyphenyl) propionic acid, gamma-(3,5-dicyclohexyl-4-hydroxyphenyl) propionic acid, 3,5-di-tert-butyl-4-hydroxyphenylacetic acid: with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-hydroxyethyl oxalic acid diamide, 3-thiaundecanol, 3-thiapentadecanol, trimethylhexanediol, trimethylolpropane, 4-hydroxymethyl-1-phospha-2,6,7-trioxabicyclo[2.2.2]octane;
   1.14. Amides of beta-(3,5-di-tert-butyl-4-hydroxyphenyl) propionic acid: N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine;
   1.15. Ascorbic acid (vitamin C);
   1.16. Aminic antioxidants: N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'dicyclohexyl-p-phenylenediamine, N,N'-diphenyl-p-phenylenediamine, N,N'-di(naphth-2-yl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulphonamido)-diphenylamine, N,N'-dimethyl-N,N'-di-sec-butyl-p-phenylenediamine, diphenylamine, N-allyldiphenylamine, 4-isopropoxydiphenylamine, 4-n-butylaminophenol, 4-butyrylaminophenol, 4-nonanoylaminophenol, 4-dodecanoylaminophenol, 4-octadecanoylaminophenol, di(4-methoxyphenyl)amine, 2,6-di-tert-butyl-4-dimethylaminomethyl phenol, 2,4'-diaminodiphenylmethane, 4,4'-diaminodiphenylmethane, N,N,N',N'-tetramethyl-4,4'-diaminodiphenylmethane, 1,2-di[(2-methylphenyl)amino]-ethane, 1,2-di(phenylamino)propane, (o-tolyl)biguanide, di[4-(1',3'-dimethylbutyl)phenyl]amine, tert-octylated N-phenyl-1-naphthylamine, mixture of mono- and di-alkylated tert-butyl/tert-octyl-diphenylamines, mixture of mono- and di-alkylated nonyldiphenylamines, mixture of mono- and di-alkylated dodecyldiphenylamines, mixture of mono- and di-alkylated isopropyl/isohexyl-diphenylamines, mixtures of mono- and di-alkylated tert-butyldiphenylamines, 2,3-dihydro-3,3-dimethyl-4H-1,4-benzothiazine, phenothiazine, mixture of mono- and di-alkylated tert-butyl/tert-octyl-phenothiazines, mixtures of mono- and di-alkylated tert-octylphenothiazines, N-allylphenothiazine, N,N,N',N'-tetraphenyl-1,4-diaminobut-2-ene, N,N-bis(2,2,6,6-tetramethylpiperidin-4-yl)hexamethylenediamine, bis(2,2,6,6-tetramethylpiperidin-4-yl)sebacate, 2,2,6,6-tetramethylpiperidin-4-one, 2,2,6,6-tetramethylpiperidin-4-ol.
2. Examples of further antioxidants: aliphatic or aromatic phosphites, esters of thiodipropionic acid or thiodiacetic acid or salts of dithiocarbamic acid, 2,2,12,12-tetramethyl-5,9-dihydroxy-3,7,11-trithiatridecane and 2,2,15,15-tetramethyl-5,12-dihydroxy-3,7,10,14-tetrathiahexadecane.
3. Examples of Metal Deactivators. e.g. for Copper:
   3.1. Benzotriazoles and derivatives thereof: 2-mercaptobenzotriazole, 2,5-dimercaptobenzotriazole, 4- or 5-alkylbenzotriazoles (e.g. tolutriazole) and derivatives thereof, 4,5,6,7-tetrahydrobenzotriazole, 5,5'-methylene-bis-benzotriazole; Mannich bases of benzotriazole or tolutriazole, such as 1-[di(2-ethylhexyl) aminomethyl]tolutriazole and 1-[di(2-ethylhexyl)aminomethyl]benzotriazole; alkoxyalkyl-benzotriazoles, such as 1-(nonyloxy-methyl)benzotriazole, 1-(1-butoxyethyl)-benzotriazole and 1-(1-cyclohexyloxybutyl)-tolutriazole;
   3.2. 1,2,4-Triazoles and derivatives thereof: 3-alkyl-(or -aryl-) 1,2,4-triazoles, Mannich bases of 1,2,4-triazoles, such as 1-[di(2-ethylhexyl)aminomethyl]-1,2,4-triazole; alkoxyalkyl-1,2,4-triazoles, such as 1-(1-butoxyethyl)-1,2,4-triazole; acylated 3-amino-1,2,4-triazoles;
   3.3. Imidazole derivatives: 4,4'-methylene-bis(2-undecyl-5-methyl) imidazole and bis[(N-methyl)imidazol-2-yl]carbinol-octyl ether;
   3.4. Sulphur-containing heterocyclic compounds: 2-mercaptobenzothiazole, 2,5-dimercapto-1,3,4-thiadiazole, 2,5-dimercaptobenzothiadiazole and derivatives thereof; 3,5-bis[di(2-ethylhexyl)aminomethyl]-1,3,4-thiadiazolin-2-one;
   3.5. Amino compounds: salicylidene-propylenediamine, salicylaminoguanidine and salts thereof.
4. Examples of Rust Inhibitors:
   4.1. Organic acids, their esters, metal salts, amine salts and anhydrides: alkyl- and alkenyl-succinic acids and their partial esters with alcohols, diols or hydroxycarboxylic acids, partial amides of alkyl- and alkenyl-succinic acids, 4-nonylphenoxyacetic acid, alkoxy-and alkoxyethoxy-carboxylic acids, such as dodecyloxyacetic acid, dodecyloxy (ethoxy) acetic acid and amine salts thereof, and also N-oleoyl-sarcosine, sorbitan monooleate, lead naphthenate, alkenylsuccinic acid anhydrides, e.g. dodecenylsuccinic acid anhydride, 2-(2-carboxyethyl)-1-dodecyl-3-methylglycerol and salts thereof, especially sodium and triethanolamine salts thereof.
   4.2. Nitrogen-containing Compounds:
      4.2.1.Tertiary aliphatic or cycloaliphatic amines and amine salts of organic and inorganic acids, e.g. oil-soluble alkylammonium carboxylates, and 1-[N,N-bis(2-hydroxyethyl)-amino]-3-(4-nonylphenoxy)propan-2-ol;
      4.2.2. Heterocyclic compounds: substituted imidazolines and oxazolines, e.g. 2-heptadecenyl-1-(2-hydroxyethyl)-imidazoline;
      4.2.3.Sulphur-containing compounds: barium dinonylinaphthalene sulphonates, calcium petroleum sulphonates, alkylthio-substituted aliphatic carboxylic acids, esters of aliphatic 2-sulphocarboxylic acids and salts thereof.
5. Examples of viscosity index enhancers: polyacrylates, polymethacrylates, nitrogen containing polymethylmethacrylates, vinylpyrrolidone/methacrylate copolymers, polyvinylpyrrolidones, polybutenes, polyisobutylenes, olefin copolymers such as ethylene-propylene copolymers, styrene-isoprene copolymers, hydrated styrene-isoprene copolymers, styrene/acrylate copolymers and polyethers. Multifunctional viscosity improvers, which also have dispersant and/or antioxidancy properties are known and may optionally be used in addition to the products of this invention.
6. Examples of pour-point depressants: polymethacrylates, ethylene/vinyl acetate copolymers, alkyl polystyrenes, fumarate copolymers, alkylated naphthalene derivatives.
7. Examples of dispersants/surfactants: polybutenylsuccinic acid amides or imides, polybutenylphosphonic acid derivatives, basic magnesium, calcium and barium sulphonates and phenolates.
8. Examples of extreme-pressure and anti-wear additives: sulphur- and halogen-containing compounds, e.g. chlorinated paraffins, sulphurized olefins or vegetable oils (soybean oil, rape oil), alkyl- or aryl-di- or -tri-sulphides, benzotriazoles or derivatives thereof, such as bis(2-ethylhexyl) aminomethyl tolutriazoles, dithiocarbamates, such as methylene-bis-dibutyldithiocarbamate, derivatives of 2-mercaptobenzothiazole, such as 1-[N,N-bis(2-ethylhexyl)aminomethyl]-2-mercapto-1H-1,3-benzothiazole, derivatives of 2,5-dimercapto-1,3,4-thiadiazole, such as 2,5-bis(tert-nonyldithioyl,3,4-thiadiazole.
9. Examples of coefficient of friction reducers: lard oil, oleic acid, tallow, rape oil, sulphurized fats, amides, amines. Further examples are given in EP-A-0 565 487.
10. Examples of special additives for use in water/oil metal-working fluids and hydraulic fluids: Emulsifiers: petroleum sulphonates, amines, such as polyoxyethylated fatty amines, non-ionic surface-active substances; buffers: such as alkanolamines; biocides: triazines, thiazolinones, tris-nitromethane, morpholine, sodium pyridenethiol; processing speed improvers: calcium and barium sulphonates.

The pour point depressant may be admixed with the above-mentioned directly in a lubricant. It is also possible to prepare a concentrate or a so-called "additive pack", which can be diluted to give the working concentrations for the intended lubricant.

Lubricating oils containing the copolymers of the present invention may be used in a number of different applications including automatic transmission fluids, manual transmission fluids, hydraulic fluids, greases, gear fluids, metal-working fluids, engine oil applications and shock absorber fluids.

### EXAMPLES

### Example 1: Synthesis of lauryl-behenyl methacrylate copolymer (90/10 monomer weight ratio)

140 g of high temperature oil (neutral hydrotreated oil) is charged to a reactor and heated to 95°C under nitrogen. 0.406 g t-Butyl peroctoate in 7.7 g of oil is added to the heated oil in the reactor. Two separate parallel feeds are set-up for metering into the reactor. The first feed is made up of a mixture of 252.0 g of lauryl methacrylate, 28 g of behenyl methacrylate, 1.12 g of dodecyl mercaptan (DDM) and 235.2 g of high temperature oil and is metered over a 2 hour period. The second feed consists of 1.22 g t-butyl peroctoate in 23.14 g of oil and is fed over a 3 hour period. Both first and second feeds are started simultaneously. At the end of 2 hours of feed, the second feed rate of the initiator is doubled. The reaction mixture is held for an additional hour at 95°C after which an additional charge of initiator, 0.56 g in 10.64 g oil, is added to the reaction mixture and held for one more hour at 95°C.The average chain length for the lauryl methacrylate is about 12.6 carbon atoms. The average carbon chain length for the behenyl methacrylate is about 20.3 carbon atoms. The formed polyalkyl methacrylate (lauryl/behenyl polymethacrylate 90/10) formed in Example 1 has an average chain length of about 13.4 carbon atoms.

**Table I**

| The resulting composition of the polyalkyl methacrylate copolymer formed in Example 1 is: | |
|---|---|
| Polymer Components | Weight-% Based on Total Weight of Co-polymer |
| Dodecylmethacrylate | 61 |
| Tetradecylmethacrylate | 23 |
| Hexadecylmethacrylate | 7 |
| Octadecylmethacrylate | 4 |
| Eicosylmethacrylate | 1 |
| Docosylmethacrylate | 4 |

### Example 2: Synthesis of lauryl/ C₃₀-alkyl methacrylate copolymer (90/10 monomer weight ratio)

100.0 g of high temperature oil (neutral hydrotreated oil) is charged to a reactor and heated to 95°C under nitrogen. 0.213 g t-Butyl peroctoate in 4.05 g of oil is added to the heated oil in the reactor. Two separate parallel feeds are set-up for metering into the reactor. The first feed is made up of a mixture of 180.1 g of lauryl methacrylate, 31.48 g of C₃₀-alkyl methacrylate, 1.46 g of dodecyl mercaptan (DDM) and 175.8 g of high temperature oil and is metered over a 2 hour period. The first feed is also stirred and gently heated because the C₃₀-alkyl methacrylate is not completely soluble in the base oil at room temperature. The second feed consists of 0.64 g t-butyl peroctoate in 12.14 g of oil and is fed over a 3 hour period. The first and second feeds are started simultaneously. At the end of 2 hours, the second feed rate of the initiator is doubled. The reaction mixture is held for an additional hour at 95°C, after which an additional charge of initiator, 0.29 g in 3.61 g oil is added to the reaction mixture and held for one more hour at 95°C.The average chain length of the C₃₀alkyl methacrylate is 30.4 carbon atoms. The average chain length of the formed polymethacrylate copolymer (90/10 lauryl/C₃₀alkyl) of Example 2 is 14.4.

**Table II**

| The resulting composition of the polyalkyl methacrylate copolymer formed in Example 2 is: | |
|---|---|
| No. of Carbon Atoms in Alkyl Chain | Wt.-% Based on Total Weight of Copolymer |
| 12 | 65.1 |
| 14 | 21.1 |
| 16 | 4.3 |
| 18 | 0.5 |
| 20 | 0.6 |
| 22 | 0.7 |
| 24 | 0.8 |
| 26 | 0.8 |
| 28 | 0.9 |
| 30 | 0.8 |
| 32 | 0.8 |
| 34 | 0.7 |
| 36 | 0.7 |
| 38 | 0.5 |
| 40 | 0.4 |
| 42 | 0.3 |
| 44 | 0.3 |
| 46 | 0.2 |
| 48 | 0.1 |
| 50 | 0.1 |
| 52 | 0.08 |
| 54 | 0.06 |
| 56 | 0.04 |
| 58 | 0.02 |

### Example 3

Application data for pour point depressant: Comparison of viscosities at low temperatures.

The copolymer of Example 1 and a commercial pour point depressant are each added separately to hydrotreated Group II mineral oil. The pour point and viscosities are recorded in Table 3.

**Table III**

| Properties of 0.2 wt.-% of PPD in Group II Hydrotreated Mineral Oil. | | | |
|---|---|---|---|
| PPD¹ | Pour Point [°C] | Low Temp. Brookfield Viscosity at -35 °C [cP] | Kinematic Viscosity 40°C [cSt] |
| Hydrotreated Group II Oil | -18 | Too viscous to measure | 35.48 |
| Comparative² Example | -42(-39) | 244 000 | 35.82 |
| Example 1 | -45 | 80 600 | 35.5 |

| | | | |
|---|---|---|---|
| ¹⁾ The compositions of Example 1 and the Comparative Example comprise 40 wt.-% polyalkyl methacrylates in hydrotreated oil. 0.2 wt.-% of this solution is added to the hydrotreated oil to determine the viscosity and pour point. The 0.2 wt.-% in Table 3 represents 0.8 wt.-% actives (copolymer). ²⁾ The composition according to the Comparative Example comprises a commercially available polyalkyl methacrylate copolymer. The polymer is formed from long chain esters of methacrylate (≥ C 12). | | | |

The pour point in parenthesis represents a second run of the same test. The commercially available polyalkyl methacrylate copolymer is determined to be a distribution of primarily C₁₂-C₁₈alkyl methacrylates. No C₂₂alkyl methacrylate is detected by pyrolysis GC/MS. The Low Temperature Brookfield Viscosity is determined by ASTM D2983. Kinematic Viscosity is determined by ASTM D445. Pour point is determined by ASTM D5950. Table 3 shows that Example 1 (invention) has a significantly lower viscosity at low temperatures than the commercially available polyalkyl methacrylate.

## Claims

1. A method of lowering the pourpoint of a mineral oil composition, which comprises adding to
(i) A mineral oil;
(ii) A polyalkyl methacrylate copolymer comprising monomer units formed from:
(A) 60.0 - 96.0 wt.-% of a C₁₂-C₁₆alkyl methacrylate; and
(B) 40.0 - 4.0 wt.-% of a C₁₈-C₃₀alkyl methacrylate;
wherein component (B) comprises about 40 to about 50 weight percent C₁₈ alkyl methacrylate, about 5 to about 15 weight percent C₂₀ alkyl methacrylate and about 40 to about 50 weight percent C₂₂ alkyl methacrylate based on the total weight of component (B); and, optionally,
(iii) Other additives.

2. The method of claim 1, which comprises adding to the mineral oil a copolymer of a weight average molecular weight from 5 000 - 250 000.

3. The method of claim 1, which comprises adding to the mineral oil a copolymer, wherein component (A) is 65.0 - 95.0 wt.-% of the formed polyalkyl methacrylate copolymer.

4. The method of claim 1, which comprises adding to the mineral oil a copolymer, wherein component (B) is 35.0 - 5.0 wt.-% of the formed polyalkyl methacrylate copolymer.

5. The method of claim 1, wherein component (A) is a straight chain or branched alkyl ester of methacrylic acid selected from the group consisting of lauryl methacrylate, myristyl methacrylate, cetyl methacrylate, dodecyl methacrylate, tridecyl methacrylate, tetradecyl methacrylate, pentadecyl methacrylate, hexadecyl methacrylate and mixtures thereof.

6. The method of claim 1, wherein component (B) is a straight chain or branched alkyl ester of methacrylic acid selected from the group consisting of stearyl methacrylate, octadecyl methacrylate, nonadecyl methacrylate, eicosyl methacrylate, henicosyl methacrylate, docosyl methacrylate, tricosyl methacrylate, tetracosylmethacrylate, pentacosyl methacrylate, hexacosyl methacrylate, octacosyl methacrylate, nonacosyl methacrylate, triacontyl methacrylate and behenyl methacrylate and mixtures thereof.

7. The method of claim 1, wherein component (A) is lauryl methacrylate and component (B) is behenyl methacrylate.

8. The method of claim 1, wherein component (ii) is present in an amount of from 0.01 - about 5 parts by weight of active copolymer per 100 parts by weight of oil.

## Patentansprüche

1. Verfahren zur Erniedrigung des Pourpoints einer Mineralölzusammensetzung, bei dem man
(i) einem Mineralöl
(ii) ein Polyalkylmethacrylatcopolymer, das aus
(A) 60,0 - 96,0 Gew.-% eines C₁₂-C₁₆-Alkylmethacrylats und
(B) 40,0 - 4,0 Gew.-% eines C₁₈-C₃₀-Alkylmethacrylats,
wobei die Komponente (B) etwa 40 bis etwa 50 Gewichtsprozent C₁₈-Alkylmethacrylat, etwa 5 bis etwa 15 Gewichtsprozent C₂₀-Alkylmethacrylat und etwa 40 bis etwa 50 Gewichtsprozent C₂₂-Alkylmethacrylat, bezogen auf das Gesamtgewicht der Komponente (B) umfasst, gebildete Monomereinheiten umfasst; und gegebenenfalls
(iii) andere Additive
zusetzt.

2. Verfahren nach Anspruch 1, bei dem man dem Mineralöl ein Copolymer mit einem gewichtsmittleren Molekulargewicht von 5.000 - 250.000 zusetzt.

3. Verfahren nach Anspruch 1, bei dem man dem Mineralöl ein Copolymer, worin Komponente (A) 65,0 - 95,0 Gew.-% des gebildeten Polyalkylmethacrylatcopolymers ausmacht, zusetzt.

4. Verfahren nach Anspruch 1, bei dem man dem Mineralöl ein Copolymer, worin Komponente (B) 35,0 - 5,0 Gew.-% des gebildeten Polyalkylmethacrylatcopolymers ausmacht, zusetzt.

5. Verfahren nach Anspruch 1, bei dem es sich bei Komponente (A) um einen geradkettigen oder verzweigten Alkylester von Methacrylsäure aus der Gruppe bestehend aus Laurylmethacrylat, Myristylmethacrylat, Cetylmethacrylat, Dodecylmethacrylat, Tridecylmethacrylat, Tetradecylmethacrylat, Pentadecylmethacrylat, Hexadecylmethacrylat und Mischungen davon handelt.

6. Verfahren nach Anspruch 1, bei dem es sich bei Komponente (B) um einen geradkettigen oder verzweigten Alkylester von Methacrylsäure aus der Gruppe bestehend aus Stearylmethacrylat, Octadecylmethacrylat, Nonadecylmethacrylat, Eicosylmethacrylat, Henicosylmethacrylat, Docosylmethacrylat, Tricosylmethacrylat, Tetracosylmethacrylat, Pentacosylmethacrylat, Hexacosylmethacrylat, Octacosylmethacrylat, Nonacosylmethacrylat, Triacontylmethacrylat und Behenylmethacrylat und Mischungen davon handelt.

7. Verfahren nach Anspruch 1, bei dem es sich bei Komponente (A) um Laurylmethacrylat und bei Komponente (B) um Behenylmethacrylat handelt.

8. Verfahren nach Anspruch 1, bei dem Komponente (ii) in einer Menge von 0,01 - etwa 5 Gewichtsteilen aktives Copolymer pro 100 Gewichtsteile Öl vorliegt.

## Revendications

1. Méthode de réduction du point d'écoulement d'une composition d'huile minérale, **caractérisée en ce qu'**elle comprend l'addition à
(i) une huile minérale ;
(ii) d'un copolymère de polyméthacrylate d'alkyle comprenant des motifs monomères formés à partir de :
(A) 60,0 à 96,0 % en poids d'un méthacrylate de C₁₂-C₁₆alkyle ; et
(B) 40,0 à 4,0 % en poids d'un méthacrylate de C₁₈-C₃₀alkyle ;
le composant (B) comprenant d'environ 40 à environ 50 pour cent en poids de méthacrylate de C₁₈alkyle, d'environ 5 à environ 15 pour cent en poids de méthacrylate de C₂₀alkyle et d'environ 40 à environ 50 pour cent en poids de méthacrylate de C₂₂alkyle sur la base du poids total du composant (B) ; et éventuellement,
(iii) d'autres additifs.

2. Méthode selon la revendication 1, **caractérisée en ce qu'**elle comprend l'addition à l'huile minérale d'un copolymère d'un poids moléculaire moyen en poids de 5 000 à 250 000.

3. Méthode selon la revendication 1, **caractérisé en ce qu'**elle comprend l'addition à l'huile minérale d'un copolymère, le composant (A) étant de 65,0 à 95,0 % en poids du copolymère de polyméthacrylate d'alkyle formé.

4. Méthode selon la revendication 1, **caractérisé en ce qu'**elle comprend l'addition à l'huile minérale d'un copolymère, le composant (B) étant de 35,0 à 5,0 % en poids du copolymère de polyméthacrylate d'alkyle formé.

5. Méthode selon la revendication 1, **caractérisée en ce que** le composant (A) est un ester d'alkyle à chaîne droite ou ramifiée d'acide méthacrylique choisi dans le groupe constitué par le méthacrylate de lauryle, le méthacrylate de myristyle, le méthacrylate de cétyle, le méthacrylate de dodécyle, le méthacrylate de tridécyle, le méthacrylate de tétradécyle, le méthacrylate de pentadécyle, le méthacrylate d'hexadécyle et des mélanges de ceux-ci.

6. Méthode selon la revendication 1, **caractérisée en ce que** le composant (B) est un ester d'alkyle à chaîne droite ou ramifiée d'acide méthacrylique choisi dans le groupe constitué par le méthacrylate de stéaryle, le méthacrylate d'octadécyle, le méthacrylate de nonadécyle, le méthacrylate d'eicocyle, le méthacrylate d'hénicosyle, le méthacrylate de docosyle, le méthacrylate de tricosyle, le méthacrylate de tétracosyle, le méthacrylate de pentacosyle, le méthacrylate d'hexacosyle, le méthacrylate d'octacosyle, le méthacrylate de nonacosyle, le méthacrylate de triacontyle et le méthacrylate de béhényle et des mélanges de ceux-ci.

7. Méthode selon la revendication 1, **caractérisée en ce que** le composant (A) est le méthacrylate de lauryle et le composant (B) est le méthacrylate de béhényle.

8. Méthode selon la revendication 1, **caractérisée en ce que** le composant (ii) est présent dans une quantité de 0,01 à environ 5 parties en poids d'un copolymère actif par 100 parties en poids d'huile.
